(19) Europäisches Patentamt
European Patent Office
Office européen des brevets

(11) **EP 4 657 695 A1**

(12) **EUROPEAN PATENT APPLICATION**

(43) Date of publication:
**03.12.2025 Bulletin 2025/49**

(21) Application number: **24305870.8**

(22) Date of filing: **02.06.2024**

(51) International Patent Classification (IPC):
*H02J 3/32* (2006.01)    *H02J 3/38* (2006.01)
*H02J 7/34* (2006.01)

(52) Cooperative Patent Classification (CPC):
**H02J 3/32; G06N 3/02; G06N 3/045; G06N 3/08;
H02J 3/381; H02J 7/34**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **TotalEnergies OneTech
92400 Courbevoie (FR)**

(72) Inventors:
• **Assaad, Charbel
Roskilde (DK)**

• **Murcia Leon, Juan Pablo
Roskilde (DK)**
• **Das, Kaushik
Roskilde (DK)**
• **Sørensen, Poul Ejnar
Roskilde (DK)**
• **Ghazouani, Sami
Courbevoie (FR)**

(74) Representative: **Bandpay & Greuter
11 rue Christophe Colomb
75008 Paris (FR)**

(54) **LEARNING A SURROGATE MODEL OF AN HPP ENERGY MANAGEMENT SYSTEM AND USE FOR HPP SIZING**

(57)    The disclosure concerns a method, for learning an EMS surrogate. The method comprises obtaining a dataset of training examples and training the surrogate. Each example includes an input and an output. The input includes ratios representing a HPP configuration, including a ratio between a renewable production capacity and a grid connection. The ratios further include a ratio between a rated battery power and the grid connection. The ratios further include a ratio between a battery energy capacity and the rated battery power. The input further includes data representing a plurality of time series each representing renewable energy resource power over a predetermined period and a plurality of time series each representing grid energy demand over the predetermined period. The output includes data representing one or more pluralities of time series each representing a respective operational parameter of the HPP, and each obtained by applying a high-fidelity EMS to the input.

FIG. 3

**Description**

**TECHNICAL FIELD**

The disclosure relates to the field of computer programs and systems, and more specifically to a method of machine-learning, for learning a surrogate model of an HPP (Hybrid Power Plant) Energy Management System (EMS), to a surrogate model of an EMS learnable according to the method of machine-learning, to a method of use of this surrogate model, to a computer program for performing the method and/or the method of use, to a computer-readable data storage medium having recorded thereon the computer program and/or the surrogate model, and to a computer system comprising a processor coupled to a memory, the memory having recorded thereon the computer program and/or the surrogate model.

**BACKGROUND**

Sizing of Hybrid Power Plants (HPPs), which include renewable power plants (*e.g.* wind power plants and/or solar power plants) and battery energy systems, is essential to capture trade-offs among various technology mixes. To accurately represent these trade-offs, an Energy Management System (EMS) is introduced to model the operation of a battery when participating in any power market, resulting in realistic predictions. However, traditional EMS models are computationally expensive to solve, a challenge that intensifies when integrating these models into sizing processes.

There is still thus a need for improved solutions usable for HPP sizing.

**SUMMARY**

It is therefore provided a computer-implemented method of machine-learning, for learning a surrogate model of an HPP Energy Management System (EMS). The method comprises obtaining a dataset of training examples. Each training example includes an input. The input includes ratios. The ratios represent a configuration of a hybrid power plant (HPP). The ratios include a ratio $P^R/P^G$ between a production capacity by one or more renewable energy resource $P^R$ and a grid connection $P^G$. The ratios further include a ratio $B^P/P^G$ between a rated battery power $B^P$ and the grid connection $P^G$. The ratios further include a ratio $B^E/B^P$ between a battery energy capacity $B^E$ and the rated battery power $B^P$. The input further includes data. The data represent a plurality of time series each representing power of each renewable energy resource over a predetermined period. The data further include a plurality of time series each representing a demand for energy from the grid over the predetermined period. Each training example further includes an output. The output includes data representing one or more pluralities of time series each representing a respective operational parameter of the HPP, and each obtained by applying a high-fidelity EMS to the input. The method further comprises training the surrogate model based on the dataset. The method may be referred to as "the learning method".

The learning method may comprise one or more of the following:

- the surrogate model includes a regressor configured for approximation of the high-fidelity EMS;
- the regressor is a multivariate linear regressor or a feed-forward neural network (FNN);
- the data representing the plurality of time series each representing power of each renewable energy resource over a predetermined period and the plurality of time series each representing a demand for energy from the grid over the predetermined period is a truncated result of a singular value decomposition (SVD) applied to a matrix concatenating the plurality of time series each representing power of each renewable energy resource over a predetermined period and the plurality of time series each representing a demand for energy from the grid over the predetermined period;
- the data representing one or more pluralities of time series each representing a respective operational parameter of the HPP is a truncated result of applying a SVD to a matrix concatenating the one or more pluralities of time series each representing a respective operational parameter of the HPP;
- the surrogate model comprises:

    ○ a preprocessing function configured to perform SVD; and/or
    ○ a postprocessing function configured to perform reverse SVD;

- the surrogate model comprises:

    ○ a preprocessing function configured to perform normalization; and/or
    ○ a postprocessing function configured to perform reverse normalization; and/or

- at least some training examples account for short term weather and/or power demand forecast uncertainty and/or variability within the predetermined period.

It is further provided a surrogate model of an EMS learnable according to the learning method.

It is further provided a computer-implemented method of use of this surrogate model of an EMS. The method of use is for HPP sizing. The method of use includes using the surrogate model instead of a high-fidelity EMS model in a HPP sizing process. The method of use may be referred to as "the sizing method".

The sizing method may comprise one or more of the following:

- the HPP sizing process comprises performing an optimization of a HPP sizing objective function having as variable the HPP sizing parameters $P^R$, $P^G$, $B^E$, and $B^P$, the objective function having as parameter an uncertainty parameter related to battery technology and/or renewable energy technology uncertainty, the optimization being based on results of applying the surrogate model; and/or

- the optimization is a maximization, and the objective function is of the type:

$$\mathbb{E}[\mathrm{PI}(x, w)] - \beta \cdot \sigma[\mathrm{PI}(x, w)],$$

where $x = (P^R, P^G, B^E, B^P)$ or $x = (P^R, B^E, B^P)$ and w is the uncertainty parameter, with w = [$f^W$, $f^B$], $f^W$ representing renewable energy technology uncertainty and $f^B$ representing battery technology uncertainty, where $\beta$ is a predetermined constant, where PI($x$, $w$) represents a HPP sizing objective, where $\sigma$[PI] is the standard deviation of PI, and IE represents the expected value;

It is further provided a computer program comprising instructions which, when executed by a computer, cause the computer to perform the learning method and/or the sizing method.

It is further provided a computer readable data storage medium having recorded thereon the computer program and/or the surrogate model.

It is further provided a system comprising a processor coupled to a memory, the memory having recorded thereon the computer program and/or the surrogate model.

It is further provided a device comprising a data storage medium having recorded thereon the computer program and/or the surrogate model.

The device may form or serve as a non-transitory computer-readable medium, for example on a SaaS (Software as a service) or other server, or a cloud based platform, or the like. The device may alternatively comprise a processor coupled to the data storage medium. The device may thus form a computer system in whole or in part (*e.g.* the device is a subsystem of the overall system). The system may further comprise a graphical user interface coupled to the processor.

## BRIEF DESCRIPTION OF THE DRAWINGS

Non-limiting examples will now be described in reference to the accompanying drawings, where:

- FIG.s 1 to 9 illustrate the methods; and

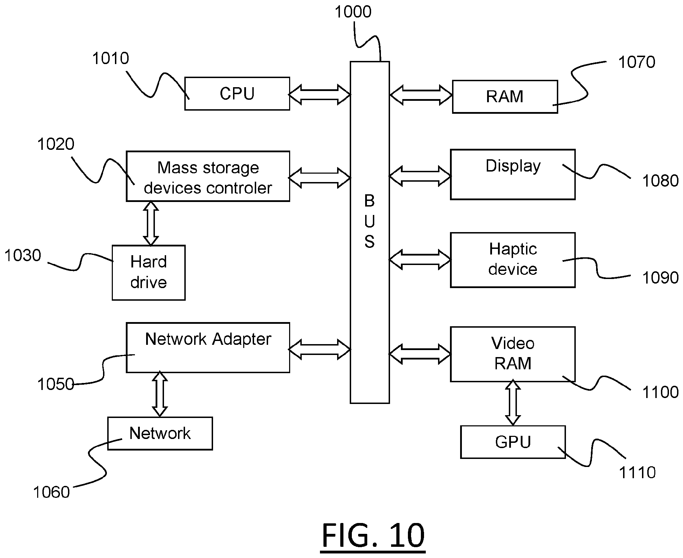

- FIG. 10 shows an example of the system.

## DETAILED DESCRIPTION

It is proposed a computer-implemented method of machine-learning, for learning a surrogate model of an HPP Energy Management System (EMS). The method comprises obtaining a dataset of training examples. Each training example includes an input. The input includes ratios. The ratios represent a configuration of a hybrid power plant (HPP). The ratios include a ratio $P^R/P^G$ between a production capacity by one or more renewable energy resource $P^R$ and a grid connection $P^G$. The ratios further include a ratio $B^P/P^G$ between a rated battery power $B^P$ and the grid connection $P^G$. The ratios further include a ratio $B^E/B^P$ between a battery energy capacity $B^E$ and the rated battery power $B^P$. The input further includes data. The data represent a plurality of time series each representing power of each renewable energy resource over a predetermined period. The data further include a plurality of time series each representing a demand for energy from the grid over the predetermined period. Each training example further includes an output. The output includes data representing one or more pluralities of time series each representing a respective operational parameter of the HPP, and each obtained by applying a high-fidelity EMS to the input. The method further comprises training the surrogate model based on the dataset. The method may be referred to as "the learning method".

The learning method constitutes an improved solution usable for HPP sizing.

Notably, the learning method learns a surrogate model of an HPP (hybrid power plant) Energy Management System (EMS). Such surrogate model, once learnt, is cheaper in use (in terms of computer resources (memory and CPU consumption)) and significantly faster than the actual EMS, while however providing satisfactory quality in terms of accuracy of the output/result provided by the model. Such model may thus efficiently be used in a sizing optimization process, for optimizing the sizing of a HPP, instead for example of a high-fidelity EMS which is costly in terms of time and computer resources usage.

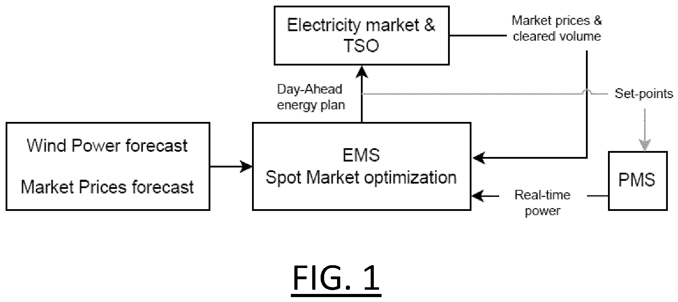

The concept of EMS is known in the fields of hybrid power plants, hybrid power plant modeling, and hybrid power plant simulation. An EMS of an HPP is a numerical model that models the various technologies of the HPP and takes into account the demand for energy from the grid (*e.g.* the market structure) in which the power plant operates, and that predicts based on these elements an operational parameter of the HPP, i.e. at least one parameter, which may comprise parameters related to power output, battery charge/discharge, battery energy capacity, curtailed power, or profits. The EMS may communicate with a Power Management System (PMS), as known in the field of HPP. FIG. 1 shows a flowchart illustrating an example of a HPP sizing workflow where EMS and PMS communicate.

The learning method is a method of machine-learning of a model, which is the surrogate model. As known *per se* from the field of machine-learning, the processing of an input by a model includes applying operations to the input, the operations being defined by data including weight values or parameters. Learning a model (*e.g.* a neural network or a regressor) thus includes determining values of the weights/parameters based on a dataset configured for such learning, such a dataset being possibly referred to as a learning dataset or a training dataset. For that, the dataset includes data pieces each forming a respective training sample or training example. The training samples/examples represent the diversity of the situations where the model is to be used after being learnt. Any training dataset herein may comprise a number of training samples/examples higher than 1000, 10000, 100000, or 1000000. In the context of the present disclosure, by "learning a model based on a dataset", it is meant that the dataset is a learning/training dataset of the model, based on which the values of the weights/parameters are set. In the present disclosure, the training dataset is the obtained dataset of training examples, on which the surrogate model is learnt/trained. In implementations, the training dataset consists of several hundreds of examples each corresponding to a different HPP configuration.

As known *per se* from machine-learning, a neural network may be defined by its architecture, parameters, and hyperparameters. The architecture consists of layers, starting with the input layer whose neuron count may be determined by the dimensionality of the input data. This layer is followed by several hidden layers with a given number of neurons and activation functions. These layers and neurons define the network's depth and width, while the activation functions may introduce nonlinearity into the model. The output layer may have as many neurons as the variables in the output data. The interconnections between these layers defines the topology of the neural network. The parameters of the neural network are the learnable weights and biases, which are determined in the training process. In contrast, the hyperparameters are pre-defined settings that are not learned from the training data. These encompasses the number of hidden layers, neurons per layer and much more. To train a neural network, at least two settings may be defined. First, a loss function, which is a metric that measures the error between the training data and the model's prediction, such as the mean square error (MSE). Second, an optimizer, which modifies the model's weights and biases during the training process to minimize the loss function. Each optimizer has its own set of hyperparameters.

The learning method comprises obtaining the training dataset, which is the dataset of training examples. Each training example may correspond to a different configuration of a HPP, *i.e.* (*e.g.* at least some of) the ratios and/or (*e.g.* at least some of) the data representing the pluralities of time series vary from one training example to another, and each training example corresponds to a respective configuration of a HPP (*i.e.* with respective values for the ratios and/or the data representing the pluralities of time series). For each training example, the output is the result of applying to the input a high-fidelity EMS (*i.e.* a deterministic EMS which is not a surrogate), for example the EMS disclosed in Zhu, R., Das, K., Sørensen, P. E., and Hansen, A. D.: Optimal Participation of Co-located Wind-battery Plants in Sequential Electricity Markets, TechRxiv, Preprint, https://doi.org/10.36227/techrxiv.21618984.v1, 2022, which is incorporated herein by reference. Any deterministic or high-fidelity EMS herein may be based on a mathematical optimization model like MILP or MINLP or the like. The method may comprise creating or forming the training dataset, or at least training examples thereof, by providing, for each training example to be created, the input, and applying to this input said high-fidelity EMS to obtain the output. Alternatively, obtaining the training dataset may comprise retrieving (*e.g.* downloading) the training dataset from a (*e.g.* distant) memory or server or database where the dataset has been stored further to its creation.

Each training examples of the training dataset includes an input and an output, the output corresponding to the result of applying said high-fidelity EMS to the input.

The input includes several ratios which altogether represent a configuration of a hybrid power plant (HPP). In other words, these ratios altogether form an objective representation of what is the HPP configuration. The ratios may also be referred to as "sizing parameters". The ratios include a ratio $P^R/P^G$ between a production capacity by one or more renewable energy resource $P^R$ and a grid connection $P^G$. The grid connection $P^G$ is a variable representing how much power can be sold to the grid in terms of physical limit, for example in MW, *e.g.* within the range [50 MW, 700 MW]. The variable $P^R$ represents the capacity (in MW) of power production by one or more energy resource of the HPP. For example, the ratios may comprise a first ratio $P^W/P^G$, where $P^W$ represents the capacity of production of the wind turbines (also referred to as "wind farm" or "wind power plant" or "wind plant") of the HPP, and/or a second ratio $P^S/P^G$, where $P^S$ represents the capacity of production of the solar power production units (*e.g.* solar panels) (also referred to as "solar farm" or "solar plant" or "solar power plant") of the HPP. These two ratios may range from 0 to 2 in the training examples, for example from 0.7 to 2. The ratios also include a ratio $B^P/P^G$ between a rated battery power $B^P$ (in MW) and the grid connection $P^G$. This ratio may range from 0 to 1 in the training examples, for example from 0 to 0.5. The ratios also include a ratio $B^E/B^P$ between a battery energy capacity $B^E$ (in MWh) and the rated battery power $B^P$. This ratio may range from 1 to 8 in the training examples, for example from 0 to 8. The rated battery power $B^P$ is the power of the battery (or of the set of batteries) of the HPP as defined by the battery's manufacturer, *e.g.* as decided by the inverter rating as known in the art. The battery energy capacity is the actual capacity of the battery (or of the set of batteries) of the HPP, *i.e.* in real-world working conditions. The ratios may vary from one training example to another in the training dataset so as to cover a sufficient number of HPP configurations, for example 200 or 250 training configurations. Latin Hypercube Sampling (LHS) may be used to ensure an equal distribution of all variables across the entire parameter space.

The input also includes data representing a plurality of time series. Each time series represents the power of each renewable energy resource. The predetermined period is a time period covered by the plurality of time series altogether, each time series of the plurality corresponding to a respective sub-period of time within the predetermined period. The predetermined period may be a year (*i.e.* 365 consecutive days). Each time series may in this case be respective to a day of this year (*i.e.* there are thus 365 time series). Each time series is thus in this case respective to a respective day $d$ and represents a series of values each of the power produced by the renewable energy resource of the HPP and each corresponding to a time of day $d$. For example, there may be such values for every 1 hour in day $d$, *i.e.* the time step of the series may be 1 hour. The renewable resource comprises the wind power production by the wind plant (*i.e.* there is a first plurality of time series respective to wind power) if variable $P^W$ is used in the ratios and/or the renewable resource comprises the solar power production by the solar plant (*i.e.* there is a first plurality of time series respective to solar power) if variable $P^S$ is used in the ratios.

In implementations, this plurality of wind power time series (and/or the solar power time series where appropriate) may be provided by external sources, or generated by a simulation tool, such as the CorRES simulation tool.

The input also include data representing a plurality of time series each representing a demand for energy (power) from the grid. The predetermined period is a time period covered by the plurality of time series altogether, each time series of the plurality corresponding to a respective sub-period of time within the predetermined period. The predetermined period may be a year (i.e. 365 consecutive days) as previously discussed. Each time series may in this case be respective to a day of this year (*i.e.* there are thus 365 time series). Each time series is thus respective to a respective day $d$ and represents a series of values each of the power demand and each corresponding to a time of day $d$. For example, there may be such values for every 1 hour in day $d$, *i.e.* the time step of the series may be 1 hour. These values may for example be spot market (SM) prices.

SM price time series for the electricity markets may be obtained from external sources, or to be obtained from a simulation tool, such as the Balancing Tool Chain (BTC) or Balmorel.

All the input plurality of time series may be concatenated into a same matrix, which may be of the type:

$$M_{in} = \begin{pmatrix} W^{HPP_n}_{t,norm,1} & W^{HPP_n}_{t,norm,2} & \cdots & W^{HPP_n}_{t,norm,365} \\ SM^{HPP_n}_{t,norm,1} & SM^{HPP_n}_{t,norm,2} & \cdots & SM^{HPP_n}_{t,norm,365} \end{pmatrix}$$

where $W^{HPP_n}_{t,norm,d}$ represents the wind power time series for day $d$ and for the HPP configuration $n$, and $SM^{HPP_n}_{t,norm,d}$ represents the SM prices time series for day $d$ and for the HPP configuration n. It is to be understood that, if solar power is produced in addition to or alternatively to wind power, corresponding solar power time series $S^{HPP_n}_{t,norm,d}$ are used in addition to $W^{HPP_n}_{t,norm,d}$ (*i.e.* as an additional line in the matrix) or alternatively to $W^{HPP_n}_{t,norm,d}$ (respectively). The input data representing time series may be such same matrix, or a truncated matrix thereof as discussed hereinafter. $M_{in}$ may thus be of shape (24x2,365), and there may be N training examples and thus N such matrices.

The output includes data representing one or more pluralities of time series each representing a respective operational parameter of the HPP, and each obtained by applying a high-fidelity EMS to the input. For example, the output may include one or more pluralities of time series, each plurality being respective to one of the following variables:

$$P^{sm}_{t,norm} = P^{sm}_t/P^G, \quad P^{sm,dis}_{t,norm} = P^{sm,dis}_t/B^P, \quad P^{sm,cha}_{t,norm} = P^{sm,char}_t/B^P$$

,

$$P_{t,norm}^{sm,curt} = P_t^{sm,curt}/(P^S - P^G), \qquad\qquad P_{t,norm}^{sm,curt} = P_t^{sm,curt}/(P^W - P^G)$$

, *Revenue-Outcome$_t$* where *RevenueOutcome$_t$* represents the revenue outcome, $P_t^{sm}$ represents the HPP power output, $P_t^{sm,dis}$ represents the battery discharging power, $P_t^{sm,char}$ represents the battery charging power, and $P_t^{sm,curt}$ represents the HPP curtailed power. A corresponding output time series matrix $M_{out}$, constructed as $M_{in}$, may be used, and the data may be this matrix, or a concatenation thereof as discussed hereinafter. However, the time step of the time series in $M_{out}$ may be equal to the dispatch interval, *e.g.* 15 minutes. $M_{out}$ may thus be of shape (96x1,365), (96x2,365), (96x3,365), (96x4,365), or (96x5,365), and there may be N training examples and thus N such matrices.

The method then comprises training the surrogate model based on the dataset, *i.e.* by inputting to the surrogate model inputs of the training examples and modifying the weights or parameters of the model as long as the model does not provide outputs which correspond sufficiently to the corresponding outputs of the training examples (*e.g.* by optimizing a loss such as MSE loss as known in the art). The surrogate model may include a regressor configured for approximation of the high-fidelity EMS, *i.e.* configured to (*i.e.* trained to) map an input example to the corresponding output example that is outputted for this input by the high-fidelity EMS. The regressor may be a multivariate linear regressor or a feed-forward neural network (FNN).

The method may use a Mean Squared Error (MSE) as the loss function to train the FNN. MSE may be chosen for its effectiveness in capturing the variance of errors. The Adam optimizer may be used for training the FNN with for example a learning rate of $10^{-4}$, $10^{-3}$ or $10^{-2}$. The multivariate linear regression may be trained using the same optimizer as for the FNN and the same loss. The training of the surrogate model may be based on a dataset comprising various HPP configurations (defined with the three ratios discussed above), each distinguished by unique sizing parameters. The input time series may in examples be the same among all HPP configurations.

The FNN may have the following hyperparameters: number of layers, and number of neurons per layer. The method may comprise, after the training, of fine tuning of these hyperparameters to obtain the best model, as known in the art. Hyperband, which uses random sampling of hyperparameters to explore a wide range of settings, may be used for the fine tuning. The FNN may comprise a rectified linear unit (ReLu) activation function for all hidden layers and, for the output layer, a linear activation function. ReLu is an appropriate activation function for the training data, particularly following the normalization process, as all input and output time series become non-negative. The tuning process aims to evaluate several thousands of FNN architectures. To avoid a computationally expensive process, these FNN may not be trained until they converge. Instead, the best-performing model, from the tuning process, may be selected for further training.

The table below shows an example of architecture of the FNN according to implementations of the method:

TABLE 1

ARCHITECTURE OF FFN

| Layers | Neurons |
|---|---|
| Input Layer | $r_{in}$ + 3 |
| Hidden Layer 1 | 8() |
| Hidden Layer 2 | 60 |
| Hidden Layer 3 | 80 |
| Hidden Layer 4 | 80 |
| Hidden Layer 5 | 80 |
| Hidden Layer 6 | 80 |
| Hidden Layer 7 | 60 |
| Hidden Layer 8 | 80 |
| Hidden Layer 9 | 80 |
| Output Layer | $r_{out}$ |

The data representing the plurality of time series each representing power of each renewable energy resource over a predetermined period and the plurality of time series each representing a demand for energy from the grid over the predetermined period may be a truncated result of a singular value decomposition (SVD) applied to a matrix. The matrix concatenates the plurality of time series each representing power of each renewable energy resource over a predetermined period and the plurality of time series each representing a demand for energy from the grid over the predetermined period. The method may apply the SVD to this concatenating matrix (*e.g.* the matrix $M_{in}$), which results in a matrix of the principal components of this concatenating matrix (e.g. denoted $Z_{in}$) and truncate the principal component matrix with a truncation level $r_{in}$.

The surrogate model may in this case comprise a preprocessing function configured to perform SVD. This function is any function that can take as input a matrix and output a SVD of this matrix. This allows input to the surrogate model the concatenating matrix (*e.g.* $M_{in}$) and to obtain a SVD thereof, which may then be truncated with a truncation level $r_{in}$ as discussed above.

Additionally or alternatively, the data representing one or more pluralities of time series each representing a respective operational parameter of the HPP may be a truncated result of applying a SVD to a matrix. The matrix concatenates the one or more pluralities of time series each representing a respective operational parameter of the HPP. The method may apply the SVD to this concatenating matrix (*e.g.* the matrix $M_{out}$), which results in a matrix of the principal components of this concatenating matrix (*e.g.* denoted $Z_{out}$) and truncate the principal component matrix with a truncation level $r_{out}$.

The surrogate model may in this case comprise a postprocessing function configured to perform reverse SVD. This function is any function that can take as input a matrix and output a reverse SVD of this matrix. This function is any function configured for reversing the SVD performed by said preprocessing function configured to perform SVD of an input of the surrogate model. This allows reverse SVD the output of the surrogate model to thereby obtain a concatenating matrix similar to those in the outputs in the training examples (*e.g.* $M_{out}$).

Using truncated matrices resulting from a SVD allows to have cheaper input data in terms of memory and computing resources used, both during training and use of the surrogate. This improves the performance of the training and use stages (from the viewpoint of computer resources usage).

The surrogate model uses a preprocessing function configured to perform normalization. This function may normalize each term in the input time series so that they scale between zero and one. This function may for example normalize the wind power time series $W_t$ or solar power time series $S_t$ by dividing with the turbine's rated power. This function may also divide the spot market price time series $SM_t$ by dividing by the maximum price.

The surrogate model may comprise a postprocessing function configured to perform reverse normalization. This function may for example perform the following reverse normalization:

$$P_t^{sm} = P_{t,norm}^{sm} * P^G, \; P_t^{sm,dis} = P_{t,norm}^{sm,dis} * B^P, \; P_t^{sm,char} =$$

$$P_{t,norm}^{sm,cha} * B^P, \; P_t^{sm,curt} = P_{t,norm}^{sm,curt} * (P^S - P^G), \; P_t^{sm,curt} = P_{t,norm}^{sm,curt} * (P^W - P^G)$$ . The reverse

normalization is however actually performed on the corresponding time series for these terms.

The surrogate model may thus consist of the composition (in this order, *i.e.* the functions are applied to an input in this order) of: the preprocessing function that performs the normalization, the regressor, and the postprocessing function that performs the reverse normalization. Alternatively, the surrogate model may consist of the composition (in this order, *i.e.* the functions are applied to an input in this order) of: the preprocessing function that performs the normalization, the preprocessing function that performs SVD, the regressor, the postprocessing function that performs the reverse SVD, and the postprocessing function that performs the reverse normalization. In any case, only the regressor may be trained with the training examples, the other functions being deterministic functions. Alternatively, the functions that perform SVD or reverse SVD may be trained SVD transformation and reverse transformation, of which method may comprise the training.

At least some training examples may account for short term weather and/or power demand forecast uncertainty and/ or variability within the predetermined period. For that, given an initial set of training examples, the training dataset may comprise, for each example of this initial set, variations of this example. These variations are modifications of this example where the input pluralities of times series correspond to variations of the input time series of the initial example where one or more terms of the series are varied within a predefined range. This models uncertainties and/or variability within the predetermined period. These variations may be created by applying a forecaster model to initial training examples. This forecaster model may be a composition of a 1D convolution neural network and of an LSTM model.

It is also provided a surrogate model of an EMS learnable according to the learning method, that is a computer-implemented function that forms a surrogate model of an EMS with the surrogate model having weights or parameters with values equal to the values that would have been set by the learning method. For example, the surrogate model may be the surrogate model that directly results from the method, *i.e.* having the architecture discussed above and having weights or parameters of which values have been set by the training step of the learning method.

It is also provided a computer-implemented method of use of this surrogate model. The method of use is for HPP sizing, *i.e.* it implements a HPP sizing process. HPP sizing refers to the task of determining a sizing of the HPP, including determining types and quantities of renewable and non-renewable power production units and of batteries based on one or more objective criteria (*e.g.* optimization of an objective function related to power production). For that, the HPP sizing process may determine optimal values of the sizing parameters (*i.e.* that optimizes an objective sizing function), based on which said types and quantities of technologies may directly be inferred as known in the art. A HPP sizing process is a process that performs such a task. The method includes using the surrogate model instead of a high-fidelity EMS model in the HPP sizing process. This provides speed and computer-efficiency for the process. As previously said, the method of use may be referred to as "the sizing method". The methods may be integrated into a same computer-implemented method that comprises performing the learning method and then the sizing method using the surrogate trained by the learning method.

The sizing method is now further discussed.

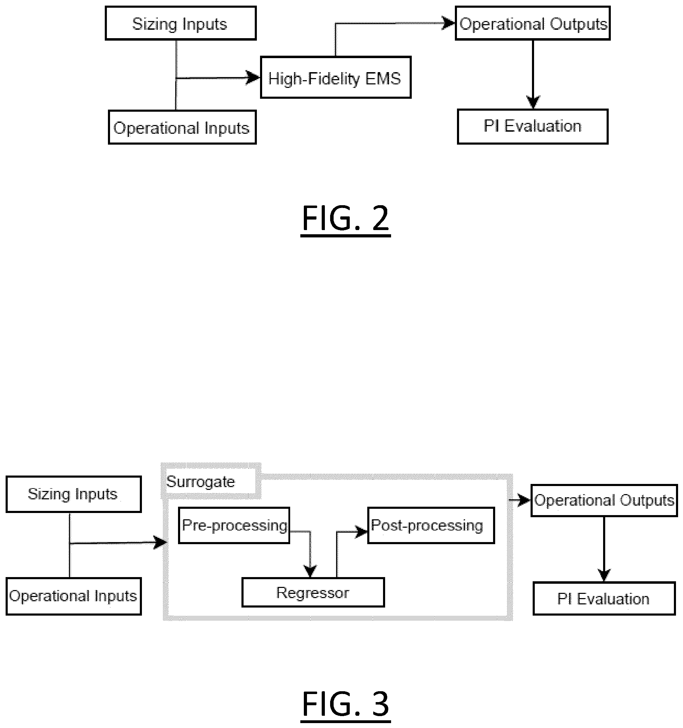

FIG. 2 and FIG. 3 illustrate the purpose of the sizing method. FIG. 2 shows a flowchart of an example of the HPP sizing process. Inputs, which include sizing inputs (the ratios) and operational inputs (the time series), are fed to a high-fidelity EMS, which outputs operational outputs. These outputs are used for the sizing (here to evaluate a function PI (profitability index) to be used in an optimization). As shown in FIG. 3, the sizing method replaces the high-fidelity EMS by the surrogate model in the HPP sizing process.

The HPP sizing process may comprise performing an optimization of a HPP sizing objective function. This objective function has as variable the HPP sizing parameters $P^R$, $P^G$, $B^E$, and $B^P$. As previously explained, $P^R$ may consist in $P^W$, $P^S$, or both. The objective function has as parameter an uncertainty parameter related to battery technology and/or renewable energy technology uncertainty. In other words, this parameter captures uncertainties related to the battery technology of the HPP and/or to the renewable energy technology. The optimization is based on results of applying the surrogate model. For example, the results of applying the surrogate model may be used to compute one or more KPI (Key Performance Indicator) which is/are used to compute the objective function. This is further discussed hereinafter.

The objective function may be of the type (e.g. may be exactly given by the formula):

$$\mathbb{E}[\text{PI}(x,w)] - \beta \cdot \sigma[\text{PI}(x,w)],$$

where $x = (P^R, P^G, B^E, B^P)$ and $w$ is the uncertainty parameter, with $w = [f^R, f^B]$, $f^R$ representing renewable energy technology uncertainty and $f^B$ representing battery technology uncertainty, where $\beta$ is a predetermined constant, where $\text{PI}(x, w)$ represents a HPP sizing objective, where $\sigma[\text{PI}]$ is the standard deviation of PI, and IE represents the expected value. $f^R$ may equal $f^W$ (wind technology uncertainty), $f^S$ (solar technology uncertainty), or $(f^W, f^S)$, depending on whether the HPP comprises a wind power plant, a solar power plant, or both. Alternatively, the grid connection $P^G$ may not be a design variable and may be fixed instead. In this case $x = (P^R, B^E, B^P)$. The uncertainties $f^W$, $f^S$ and $f^B$ may be uncertain cost factors, and may be given by Gaussian distributions, for example the following:

$$f^W \sim \mathcal{N}(1.05, 0.06), \quad f^B \sim \mathcal{N}(0.85, 0.05), f^S \sim \mathcal{N}(0.95, 0.07)$$

The sizing method may aim at guiding HPP investments over the next 3-5 years. For that, it may balance current cost trends with potential fluctuations due to technological progress and external variables like geopolitics and supply chain dynamics. Reflecting recent observations, wind turbine costs have for example seen a slight increase in the U.S. since 2019, leading to a Gaussian distribution that anticipates both potential cost increases and decreases. In contrast, documented declines in battery costs by the IEA inform a distribution skewed towards lower costs, aligning with the expected downward trend.

The sizing method may use Monte Carlo Integration to compute IE[PI(x,w)] and $\sigma[\text{PI}(x, w)]$. Monte Carlo Integration allows to approximate these statistics by sampling from the specified cost distribution. This may be done in the method as follows:

$$\mathbb{E}_w[\text{PI}(x)] \approx \frac{1}{N} \sum_{i=1}^{N} \text{PI}(x, f_i^R, f_i^B)$$

where $f_i^R$ and $f_i^B$ are respectively sampled from the joint distribution of $f^R$ and $f^B$ with $N$ representing the total number of samples. Additionally, the variance and standard deviation of PI may be computed as follows:

$$Var_w[\text{PI}(x)] \approx \frac{1}{N-1} \sum_{i=1}^{N} (PI(x, f_i^R, f_i^B) - \overline{PI}(x))^2$$

$$\sigma_w[\mathrm{PI}(x)] \approx \sqrt{Var_w[\mathrm{PI}(x)]}$$

where $\overline{PI}(x)$ is the sample mean of the function values.

Like all numerical methods, accuracy improves with the number of samples (N), though at the expense of increased computational time. Thus, the method may balance accuracy with computational efficiency by selecting an optimal sample size that achieves the desired precision without significantly burdening computation. The surrogate EMS enables swift computation of the PI, facilitating the application of a gradient-based optimization technique with finite differences for solving the optimization problem. In implementations, the method may use the Sequential Least Squares Programming (SLSQP) solver, as implemented in SciPy, to achieve this. Additionally, SLSQP is advantageous as it enables the definition of bounds for our search space, which is relevant since the surrogate model's training may encompass a specific range of HPP configurations. However, gradient-based optimization methods are susceptible to converging to local minima. To mitigate this and enhance the likelihood of identifying the global optimum, the method may implement a multi-start strategy. Specifically, for each value of β, the optimization process is initiated from 300 distinct HPP configurations (x), ensuring comprehensive search space coverage through Latin Hypercube Sampling (LHS). LHS is recognized for its efficiency in evenly distributing starting points across the search domain. The optimal configuration is determined by the one yielding the highest value of the objective function, thereby enhancing the confidence in the optimization outcome.

PI may be the profitability index, and may be given by the formula:

$$\mathrm{PI(x)} = \frac{NPV(x)}{CAPEX(x)}.$$

NPV is the Net Present Value and may be given by the formula:

$$NPV(x) = \sum_{y=1}^{Y} \frac{CF_y}{(1 + r_{AT})^y},$$

where $Y$ is the plant's operational lifetime in years, $CF_y$ is the cash flow for year $y$, and $r_{AT}$ is an after-tax discount rate.

$CF_y$ may be given by the formula:

$$CF_y = \begin{cases} Profit_y^{nom}, & \text{for } y > 0 \\ -CAPEX, & \text{for } y = 0. \end{cases}$$

The yearly nominal profits $Profit_y^{nom}$ may be calculated as follows:

$$Profit_y^{nom} = EBITDA_y - Payable\_taxes_y,$$

$$EBITDA_y = \Pi_y^{nom} - \mathrm{OPEX}_y^{nom},$$

$$\Pi_y^{nom} = \Pi_y^{real} \cdot inflation_{index\,y},$$

$$\mathrm{OPEX}_y^{nom} = \mathrm{OPEX}_y^{real} \cdot inflation_{index\,y}.$$

CAPEX stands for "Capital Expenditures" and OPEX for "Operational Expenditures". A cost model evaluates CAPEX and OPEX by considering the expenses associated with the HPP, BESS power and energy capacities, and shared infrastructure costs. $EBITDA_y$ is the Earnings Before Interest, Taxes, Depreciation, and Amortization for year $y$. $\Pi_y^{nom}$

and $\text{OPEX}_y^{nom}$ are the nominal yearly revenues and operating expenses, respectively, adjusted for inflation using:

$$inflation_{index\,y} = \prod_{j=1}^{y} (1 + inflation_j)$$

Straight-line depreciation and loss carryforward are two accounting practices that respectively distribute the cost of the HPP evenly over its lifetime and allow the carrying of losses from one year to subsequent years. Both mechanisms serve to reduce taxable income in the following way (which may be implemented by the method):

$$EBIT_y = EBITDA_y - Depreciation$$

$$Depreciation = \frac{CAPEX}{Y},$$

where $EBIT_y$ is the Earnings Before Interest and Taxes for year $y$.

The loss carryforward for year $y$ may be given by:

$$L_{y-1} = \begin{cases} -EBIT_{y-1} & \text{if } EBIT_{y-1} < 0 \\ 0 & \text{otherwise} \end{cases}$$

and the taxable income for year $y$ may be given by:

$$\text{Taxable Income}_y = \begin{cases} EBIT_y - L_{y-1} & \text{if } EBIT_y > 0 \text{ and } L_{y-1} > 0 \\ EBIT_y & \text{otherwise.} \end{cases}$$

This model assumes that the tax losses can be carried indefinitely without an amount limit.

Payable taxes for year $y$ may be calculated as:

$$Payable\_taxes_y = \text{Taxable Income}_y \cdot \tau_{tax}$$

with $\tau_{tax}$ representing the tax rate.

The cost model performs the calculation of the CAPEX and OPEX per technology as well as the shared costs. This may be done as follows:

$$CAPEX = C_w \cdot f^W + C_b \cdot f^B + C_{el}$$

$$OPEX_y = O_{w,y} \cdot f^W + O_{b,y} \cdot f^B + O_{el,y}$$

$$C_w = (WT_{cost} \cdot f^W + WT_{civil} \cdot f^W) \cdot P^W$$

$$C_b = Nb_{eq} \cdot B_{cost}^E \cdot f^B \cdot B^E + (B_{cost}^P \cdot f^B + B_{civil}^P \cdot f^B + B_{control}^P \cdot f^B) \cdot B^P$$

$$C_{el} = (HPP_{BOS} + P_{cost}^G) \cdot P^G + C_{land} * A_{HPP}$$

$$A_{HPP} = A_{WT} * N_{WT}$$

$$O_{w,y} = WT^{OM}_{fixed,y} \cdot f^W \cdot P^W + mean(AEP) \cdot WT^{OM}_{variable,y} \cdot f^W$$

$$O_{b,y} = B^{E,OM}_y \cdot f^B \cdot B^E$$

$$O_{el,y} = 0$$

where $C_w$, $C_b$, $C_{el}$, $C_{land}$ are the CAPEX of the wind power plant, batteries, the balance of the system, and the land. A CAPEX of the solar power plant $C_S$ may be used in addition to or alternatively to $C_w$, if the HPP comprises a solar power plant in addition to or alternatively to (respectively) the wind power plant. In this case, a corresponding term $C_S \cdot f^S$ is to be added in the above CAPEX formula in addition to or alternatively to $C_w \cdot f^W$, where $C_s = (S_{cost} * f^S + S_{civil} * f^S) * P^S * DC\_AC_{ratio} + S_{inverter} * P^S * f^S$, $S_{cost}$, $S_{civil}$, and $S_{inverter}$ are the solar PV's cost, civil works, and inverter costs in Euro/MW, $DC\_AC_{ratio}$ is the ratio of DC (Direct Current) power rating with respect AC (Alternative Current) rating of the PV plant. $O_{w,y}$, $O_{b,y}$, and $O_{el,y}$ are the yearly OPEX from the wind power plant, batteries and balance of the system. A CAPEX of the solar power plant $O_{s,y}$ may be used in addition to or alternatively to $O_{w,y}$, if the HPP comprises a solar power plant in addition to or alternatively to (respectively) the wind power plant. In this case, a corresponding term $O_{s,y} \cdot f^S$ is to be added in the above OPEX formula in addition to or alternatively to $O_{w,y} \cdot f^W$, where $O_{s,y} = S^{OM}_{fixed,y} * f^S * P^S * DC\_AC_{ratio}$, where $S^{OM}_{fixed,y}$ is the fixed operation and maintenance costs of the solar panel per year and per MW. $WT_{cost}$ and $WT_{civil}$ are the wind turbine's cost and civil works in Euro/MW. $Nb_{eq}$ is the number of battery equivalent in today's value. $B^E_{cost}$ is the battery energy cost per MWh while $B^P_{cost}$, $B^P_{civil}$ and $B^P_{control}$ are the battery power cost, civil costs and control system costs per MW. $HPP_{BOS}$ and $P^G_{cost}$ are the shared Balance of System (BOS) cost and grid connection cost of the HPP. $A_{HPP}$ is the total area occupied by the HPP in km² defined exclusively by the surface required for a wind turbine, $A_{WT}$, and the number of wind turbines $N_{WT}$. If, instead of or in addition to a wind power plant, the HPP comprises a solar power plant, then the term $A_{SP} * N_{SP}$ replaces the term $A_{WT} * N_{WT}$ or is added to this term (respectively) in the formula for $A_{HPP}$, where $A_{SP}$ is the surface required for a solar panel, and $N_{SP}$ is the number of solar panels. $WT^{OM}_{fixed,y}$ and $WT^{OM}_{variable,y}$ are the fixed and variable Operation and Maintenance (O&M) costs of the wind turbines per year and per MW. $mean(AEP)$ is the mean Annual Energy Production (AEP) of the wind power plant. $B^{E,OM}_y$ is the yearly O&M cost of the battery per MWh. $f^B$, $f^W$ and $f^S$ are, respectively, the battery cost scaling factor, the wind cost scaling factor, and the solar cost scaling factor. The method may use a fixed lifetime for the battery ($i_b$) as battery degradation may not be considered. Additionally, to address the decreasing costs of batteries over time, the method may employ the concept of equivalent number of present batteries $Nb_{eq}$. The method may incorporate the annual battery price reduction rate $f_b$ and the designated replacement year for each battery ($y_b(i_b)$) as follows:

$$Nb_{eq} = \sum_{i_b=0}^{N_b-1} (1-f_b)^{y_b(i_b)}$$

Given an HPP defined with vector $x$, the associated yearly revenues $\Pi^{real}_y$, and other required inputs of the cost and financial model, the method may calculate PI. $\prod_y^{real}$ may be computed using the outputs of the surrogate model as further discussed hereinafter.

The robust optimization framework (*i.e.* the sizing method) discussed above facilitates finding the optimal HPP configurations that maximize performance under variable cost conditions, considering different levels of preference for stable outcomes ($\beta$). It generates a Pareto front across $\beta$ values, showcasing the balance between profitability and its variability. Each point on the Pareto front corresponds to a $\beta$ value, indicating an equilibrium between expected gains and fluctuations tailored to varying preferences for stability. This aids decision-makers in selecting HPP configurations that align with their stability preferences and financial goals.

It is now discussed an application of the above methods for a concrete example of case study.

First of all, it is now discussed how the performance of the surrogate model is validated. In this example the surrogate has the FNN architecture. The alternatives architectures discussed above however also provide satisfactory results, according to other tests conducted by the inventors. It is trained with MSE as the loss function, using an Adam optimizer with a learning rate of $10^{-2}$. To ensure the surrogate model's reliability in predicting daily revenues and computing the profitability of HPPs based on unseen configurations, the inventors have performed validation of its performance against data outside its training set. This validation process compares the Profitability Index (PI) from actual revenues, generated by the high-fidelity HyDesign's EMS (benchmark, discussed in reference J. P. Murcia Leon, H. Habbou, M. Friis-Møller, M. Gupta, R. Zhu, and K. Das, "Hydesign: a tool for sizing optimization for grid-connected hybrid power plants including wind, solar photovoltaic, and li-ion batteries," Wind Energy Science Discussions, vol. 9, year 2024, pages. 759-776, [Online]. Available: https://wes.copernicus.org/articles/9/759/2024/, which is incorporated herein by reference), with the PI from predicted revenues by the surrogate. The validation employs unique HPP configurations, distinct from the training set, to ensure the model's generalizability. The HPP in this case study only comprises a wind power plant for the renewable part (*i.e.* no solar power plant).

The model's precision is determined by the Root Mean Square Error (RMSE) between actual and forecasted PI values:

$$RMSE = \sqrt{\frac{1}{N}\sum_{i=1}^{N}\left(PI_i - \widehat{PI}_i\right)^2}$$

where $PI_i$ is the actual PI (*i.e.* the one determined by the high-fidelity EMS), $\widehat{PI}_i$ the PI predicted by the surrogate model from the validation inputs, and N the count of HPP configurations tested. This RMSE metric offers a comprehensive evaluation of the model's accuracy across various HPP configurations in the validation dataset. Furthermore, we evaluate the surrogate's efficiency by comparing the time required to calculate the PI for all validation scenarios to that of the high-fidelity model. This efficiency, alongside the model's accuracy, emphasizes the surrogate's value for quick and dependable profitability evaluations of HPPs.

The focus of the case study is a site in India, located at longitude 68.54220353, latitude 23.54209921, and altitude 29.88355741 meters. The electricity pricing structure for this case is derived from typical power purchase agreements observed in the Indian HPP market, featuring differentiated prices during peak and non-peak hours. Peak hours, identified as 6:30-8:30 and 16:30-19:30, have electricity priced at 82 EUR/MW, while nonpeak hours are priced at 33 EUR/MW. The tender stipulates a requirement to generate power at the grid capacity limit for 2.55 hours, during peak demand and per day, with a penalty set at 82 EUR/MWh for failing to meet this demand. Wind speed data is generated following the methodology described in previously discussed reference J. P. Murcia Leon, H. Habbou, M. Friis-Møller, M. Gupta, R. Zhu, and K. Das, "Wind Energy Science Discussions, vol. 9, year 2024, pages. 759-776, [Online]. Available: https://wes.copernicus.org/articles/9/759/2024/" utilizing ERAS reanalysis data corrected with the Global Wind Atlas2 (GWA2) average wind speeds for this location. The wind turbine model selected is the Siemens Gamesa 7 MW, with a hub height of 155 meters and rotor diameter of 170 meters, requiring a land area (AWT) of 7 km2 per turbine. The price time series and the wind speed data span over a year. The financial assumptions and cost parameters utilized in this study are summarized in Table II below:

TABLE II
COST AND FINANCIAL ASSUMPTIONS

| Variable | Value | Unit |
|---|---|---|
| $r_{AT}$ | 6% | - |
| $\tau_{tax}$ | 22% | - |
| $inflation$ | 2% | per year |
| $WT_{cost}$ | 640,00 | EUR/MW |
| $WT_{civil}$ | 260,00 | EUR/MW |
| $WT_{fixed,y}^{OM}$ | 12,600 | EUR/MW/year |
| $WT_{variable,y}^{OM}$ | 1,35 | EUR/MWh/year |
| $B_{cost}^{E}$ | 90,000 | EUR/MWh |
| $B_{cost}^{P}$ | 32,000 | EUR/MW |
| $B_{civil}^{P}$ | 36,000 | EUR/MW |
| $B_{control}^{P}$ | 9,000 | EUR/MW |
| $B_{y}^{E,OM}$ | 0 | EUR/MWh/year |
| $f_b$, battery price reduction | 10% | % per year |
| $i_b$, lifetime of battery | 7 | years |
| $Y$, lifetime of HPP | 25 | years |
| $HPP_{BOS}$ | 119,940 | EUR/MW |
| $P_{cost}^{G}$ | 50,000 | EUR/MW |
| $C_{land}$ | 300,000 | EUR/km$^2$ |

Relying on a surrogate to stand in for the high-fidelity EMS requires a detailed dataset for its training and validation. To ensure robustness, the inventors use a broad spectrum of HPP configurations that are reflective of current industry practices. The ranges for these parameters are outlined in Table III below:

TABLE III

SIZING PARAMETERS AND RANGES

| Sizing Parameter | Range |
|---|---|
| $P^W/P^G$ [-] | [0.7, 2] |
| $B^P/P^G$ [-] | [0, 0.5] |
| $B^E/B^P$ [h] | [0, 8] |

Using LHS, the inventors derived 1000 unique HPP configurations from the specified parameter space. Of these, 800 configurations are allocated for training the surrogate, with the remaining 200 serving for validation purposes. The grid connection capacity (PG) is standardized at 200 MW for all configurations. Given the annual span of the price and weather input time series, the inventors generated corresponding output time series for each HPP configuration as discussed above. This process, allows for the calculation of daily revenues over a year for each configuration, ensuring a comprehensive evaluation across the entire dataset of 1000 HPP setups. In this study, it is assumed that the daily revenues obtained for this single year, and for a given HPP configuration, are representative and will remain consistent across all years of the power plant's operational lifetime. Hence, yearly revenue figures are maintained in real terms, though nominal values adjust due to inflation.

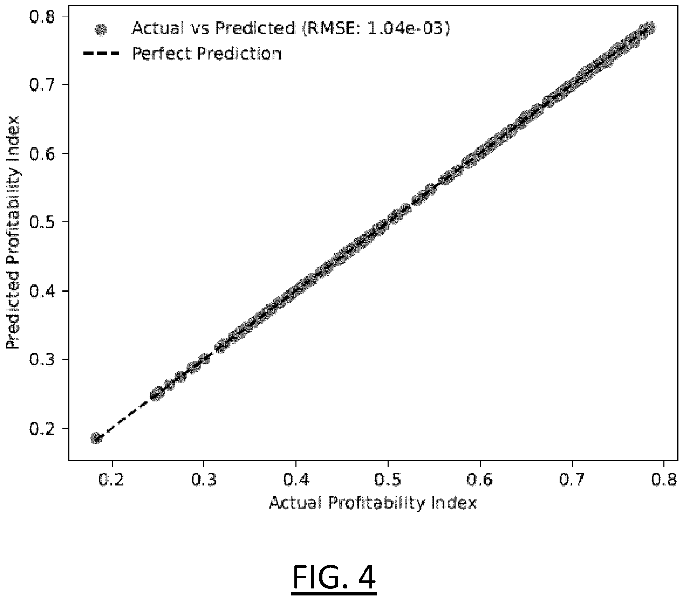

The surrogate's model validation is based on the generated validation dataset and follows the validation procedure detailed above. The comparative results are depicted in FIG. 4, which illustrates the accuracy of the surrogate in evaluating the PI. Each point on this figure represents the PI calculated throughout the lifetime of a HPP using HyDesign's EMS (on the x-axis) and the surrogate's revenues prediction (on the y-axis). The average discrepancy between the surrogate's predictions and the actual values is highlighted by an RMSE of 1.04E-3, which is significantly low considering the PI values range from 0.1 to 0.8. A comparison of computational efficiency revealed HyDesign's EMS required 1 hour to compute daily revenues for 200 HPP configurations, while the surrogate model needed merely 4.3 seconds, highlighting the surrogate's superior speed. This comparison considers only the required time to compute the outputs without considering the input generation and processing.

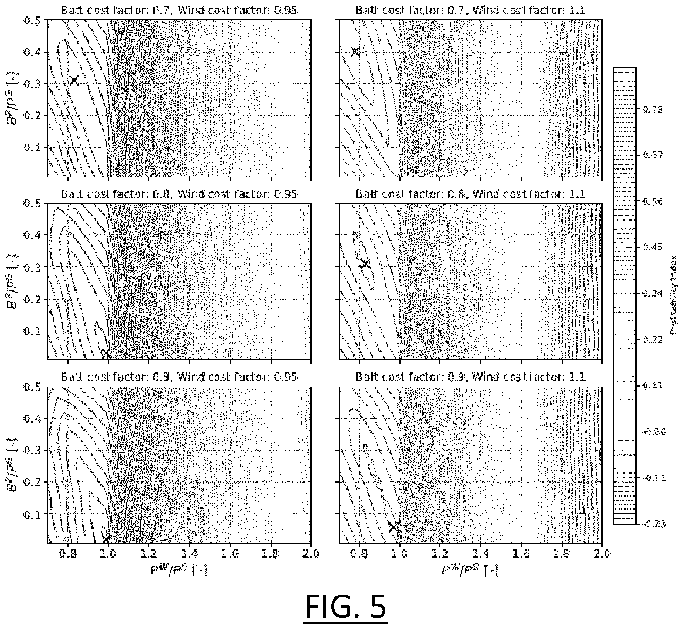

Following the validation of surrogate model's accuracy, the inventors employed it to assess the PI across various HPP configurations, using the sizing evaluation framework previously discussed, in the context of specific technology cost factors. The goal was to analyze the sensitivity of the optimal HPP configuration to changes in these cost factors. This analysis is illustrated in FIG. 5 (illustrating the Sensitivity of Optimal Design for fixed cost factors. For all HPP configurations the ratio $B^E/B^P$ is of 2 hours and $P^G = 200MW$), examining the effect of three battery cost factors [0.9, 0.8, 0.7] and two wind cost factors [0.95, 1.1]. The figure presents PI iso-contours for HPP configurations, with fixed $B^E/B^P$ ratio at 2 hours and the grid connection at 200 MW, while varying $P^W/P^G$ between 0.7 and 2, and $B^P/P^G$ between 0 and 0.5. Each subplot represents the PI evaluation for 2500 HPP configurations, with the black cross indicating the maximum PI configuration. The analysis reveals that the optimal configuration shifts with both cost factor variations. When wind turbines are more affordable (wind cost factor = 0.95) or batteries are relatively expensive, the optimal HPP leans heavily towards wind, without overplanting ($P^W/P^G = 1$). Only when battery costs drop by 30% (to a cost factor of 0.7) does a significant battery component become viable under baseline wind turbine costs. Increasing wind turbine costs by 10% results in a noticeable inclusion of batteries for a battery cost factor of 0.8, with a corresponding decrease in wind turbine share. In this scenario we observe some level of overplanting as $(P^W + P^B)/P^G$ exceeds 1. This sensitivity analysis underscores the importance of technology cost factors in the optimal design of an HPP, guiding the development of the robust optimization strategy presented above.

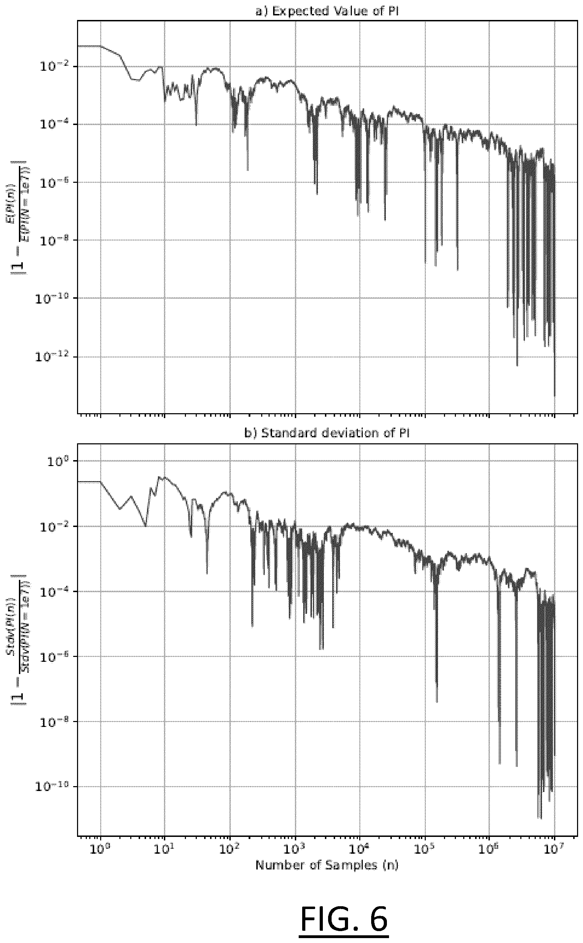

To identify the optimal HPP configuration for a given β in the optimization problem, a Monte Carlo Integration has been used as previously discussed. The challenge lies in selecting an appropriate number of samples from the joint distribution of $f^W$ and $f^B$ to achieve an accurate estimation of these metrics without excessive computational demand. The inventors assessed the convergence of these metrics with increasing sample sizes against a benchmark of $10^7$ samples, as depicted in FIG. 6 (illustrating the convergence Rate of Statistical Metrics). The analysis confirms that accuracy improves with more samples. At $10^5$ samples, the error in $\mathbb{E}[\mathrm{PI}(x, w)]$ relative to calculations with $10^7$ samples is $10^{-4}$, equating to a 0.01% uncertainty. The uncertainty for $\sigma[\mathrm{PI}(x, w)]$ is 0.1%. Additionally, while computing these metrics for a specific HPP configuration using $10^7$ samples takes approximately 3 minutes and 12 seconds, $10^5$ samples reduce this time to just 2 seconds. Therefore, a sample size of $10^5$ is selected as an optimal balance between precision and computational efficiency.

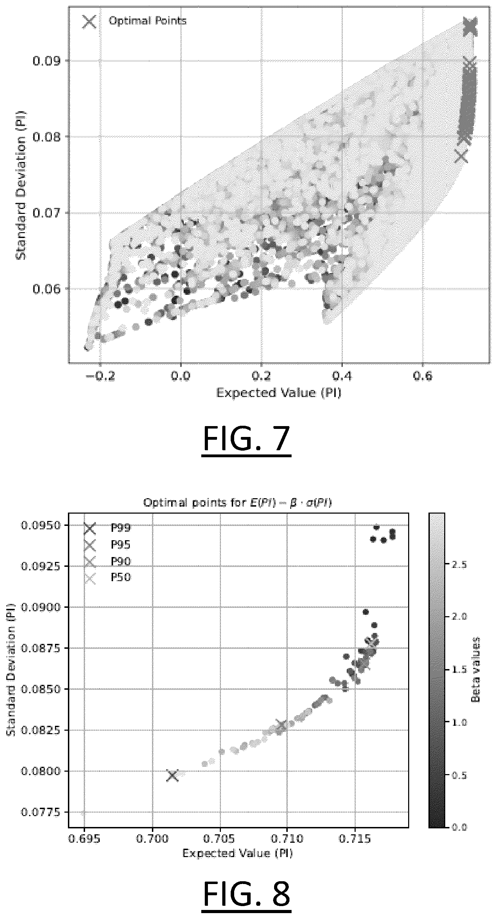

Having determined the appropriate sample size for Monte Carlo Integration, the inventors then explore the optimal HPP configurations across 100 different β values, spanning from 0 to 3, employing the multi-start strategy outlined above. FIG. 7 (illustrating Robust Optimization results with varying β) captures both the process and the intermediate optimization results. This figure plots the variability of the PI ($\sigma[\mathrm{PI}(x, w)]$) against its expected value ($\mathbb{E}[\mathrm{PI}(x, w)]$), with each point representing an HPP configuration for a specific β. Different colors denote varying β values. Within the search space, the optimal points (in red cross) result in a Pareto front.

A detailed examination of the Pareto front, showcasing the optimal configurations for each β, is provided in FIG. 8 (illustrating Robust Optimization results with varying β). This visualization clarifies the relationship between β and the resulting optimal HPP configurations. In this analysis, maintaining the same axes as the preceding figure, a pattern emerges: as β increases, both the variability $\sigma[\mathrm{PI}(x, w)]$ and the expected value ($\mathbb{E}[\mathrm{PI}(x, w)]$) of the PI decrease.

In the wind energy sector, plant profitability is often assessed using P50 and P90 values. These statistical terms denote the median production level (P50) and a conservative production estimate (P90), with the latter reflecting a 90% probability of exceeding a certain production level, also corresponding to the 10% quantile, indicating higher reliability at a lower expected output. By viewing the multi-objective function through the lens of quantiles and assuming a Gaussian distribution for PI, one can associate each β value with a corresponding quantile. This association helps us quantify the likelihood of achieving a certain PI value amidst uncertain cost factors. Formally, this probability is expressed as

$$P(PI < \mathbb{E}[PI] - \beta \cdot \sigma[PI])$$

. Consequently, the inventors calculated and depicted probabilities ranging from P50 to P99 in FIG. 8, offering a probabilistic perspective on achieving PI values under varying conditions.

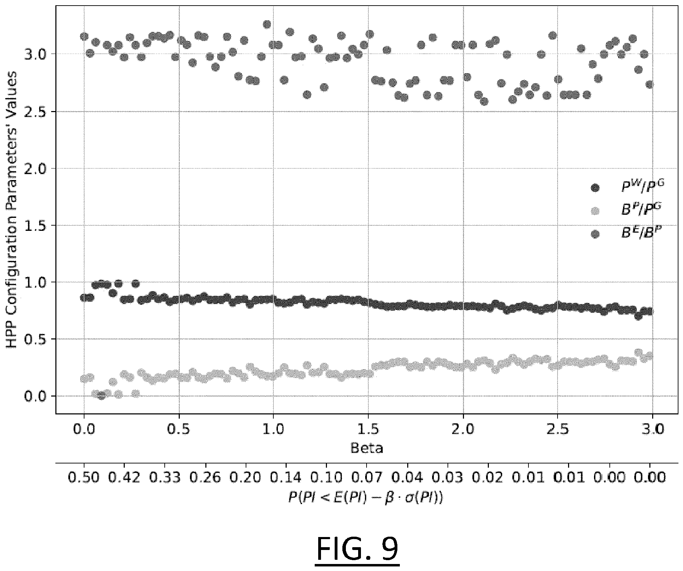

To better understand the effect of β, which signifies the preference for stable outcomes, on optimal HPP configurations, its effects are analyzed in FIG. 9 (illustrating Optimal HPP configurations with varying β). The figure demonstrates a distinct pattern in the ratios $P^W/P^G$ and $B^P/P^G$. As β increases, there is a noticeable decrease in wind power's proportion and a corresponding rise in battery power's share. Meanwhile, the ratio $B^E/B^P$ predominantly hovers around 3 hours. It's important to note that an increasing $B^P/P^G$ ratio, given a constant $P^G$ and relatively stable $B^E/B^P$, naturally leads to larger battery energy storage ($B^E$). Therefore, higher β values tend to favor configurations with larger battery-intensive HPP designs. Additionally, the figure introduces a secondary x-axis linking β values to the probability of achieving the corresponding PI under uncertain costs, assuming PI follows a Gaussian distribution. The probability

$$P(PI < \mathbb{E}[PI] - \beta \cdot \sigma[PI])$$

indicates the likelihood that the actual Profitability Index (PI) will fall below the robust optimization's objective function. Lower values of this probability suggest a higher certainty in achieving or surpassing the anticipated PI, as it implies a smaller chance that the actual PI will under-perform relative to this conservative estimate. Essentially, a lower probability reflects a more conservative and hence more reliable expectation of PI performance. Hence, FIG. 9 reveals that $\beta$ correlates with a greater likelihood of achieving the projected PI, despite the assumption of PI's distribution not being verified.

This study validates a surrogate model within an HPP sizing framework for precise profitability prediction and optimization, highlighting computational efficiency. It explores the impact of technology cost fluctuations on optimal HPP designs, revealing a strategic balance between wind and battery investments. The case study demonstrates that low wind technology costs favor wind power despite potential penalties from lack of storage. Conversely, cost-effective batteries or higher wind costs prompt battery integration to minimize penalties and exploit energy arbitrage, leading to scenarios of overplanting. This balance underscores the strategic importance of technology cost considerations in HPP design. The sensitivity analysis underscores the critical role of accommodating technology cost uncertainties in the optimization process. A robust optimization method with a multi-objective function was thus formulated. This approach equitably weighs profitability against its fluctuations due to cost uncertainties, utilizing a weight parameter ($\beta$) to gauge a business developer's preference for stability. Elevated $\beta$ values lead to designs with a greater emphasis on stability, even at the expense of potential profitability, by minimizing the PI variability. This results in configurations with an increased reliance on battery storage, enhancing power output control and ensuring a consistent energy supply, especially during peak demand, thereby reducing PI variability and offsetting wind's unpredictability.

The inventors compared their robust optimization outcomes with deterministic optimization, assuming constant cost factors at their mean ($f^W$ and $f^B$) to identify the optimal HPP configuration for maximizing PI. This comparison, using both optimizations' optimal configurations, assesses PI across all sampled cost factors, extracting specific quantiles. For each quantile, equivalent to a $\beta$ value, the inventors determined the optimal HPP configuration through robust optimization, similarly evaluating PI for all cost scenarios. Table IV below summarizes these results:

TABLE IV

COMPARATIVE STUDY: DETERMINSITIC OPTIMIAZATION (DET) VS. ROBUST OPTIMIZATION (RO)

| Quantiles | Beta | $PI_{RO}$ | $PI_{Det}$ | Relative Difference |
|---|---|---|---|---|
| 0.1 | 1.2816 | 0.60 | 0.52 | -1.3.27% |
| 0.25 | 0.6745 | 0.65 | 0.57 | -12.00% |
| 0.5 | 0.0 | 0.71 | 0.63 | -11.22% |

The analysis uses the formula for relative difference, Relative Difference = $100 \times (1 - (PI_{Det}/PI_{RO}))$, to compare robust optimization against deterministic optimization. Results across various $\beta$ values highlight robust optimization's superior performance, showcasing not only enhanced profitability but also a more reliable ability to predict the likelihood of achieving targeted PI levels over the HPP's operational lifetime.

The methods are computer-implemented. This means that steps (or substantially all the steps) of the methods are executed by at least one computer, or any system alike. Thus, steps of the methods are performed by the computer, possibly fully automatically, or, semi-automatically. In examples, the triggering of at least some of the steps of the methods may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g. one for the program, and possibly one for the database).

FIG. 10 shows an example of the system, wherein the system is a client computer system, *e.g.* a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

## Claims

1. A computer-implemented method of machine-learning, for learning a surrogate model of an HPP Energy Management System (EMS), the method comprising:

    - obtaining a dataset of training examples, each training example including:

        ▪ an input, including:

            • ratios representing a configuration of a hybrid power plant (HPP), the ratios including:

                ○ a ratio $P^R/P^G$ between a production capacity by one or more renewable energy resource $P^R$ and a grid connection $P^G$;
                ○ a ratio $B^P/P^G$ between a rated battery power $B^P$ and the grid connection $P^G$; and
                ○ a ratio $B^E/B^P$ between a battery energy capacity $B^E$ and the rated battery power $B^P$;

            • data representing:

                ○ a plurality of time series each representing power of each renewable energy resource over a predetermined period; and
                ○ a plurality of time series each representing a demand for energy from the grid over the predetermined period; and

        ▪ an output, including:

            • data representing one or more pluralities of time series each representing a respective operational parameter of the HPP, and each obtained by applying a high-fidelity EMS to the input; and

    - training the surrogate model based on the dataset.

2. The method of claim 1, wherein the surrogate model includes a regressor configured for approximation of the high-fidelity EMS.

3. The method of claim 2, wherein the regressor is a multivariate linear regressor or a feed-forward neural network (FNN).

4. The method of claim 1,2 or 3, wherein:

- the data representing the plurality of time series each representing power of each renewable energy resource over a predetermined period and the plurality of time series each representing a demand for energy from the grid over the predetermined period is a truncated result of a singular value decomposition (SVD) applied to a matrix concatenating the plurality of time series each representing power of each renewable energy resource over a predetermined period and the plurality of time series each representing a demand for energy from the grid over the predetermined period; and/or
- the data representing one or more pluralities of time series each representing a respective operational parameter of the HPP is a truncated result of applying a SVD to a matrix concatenating the one or more pluralities of time series each representing a respective operational parameter of the HPP.

5. The method of claim 4, wherein the surrogate model comprises:

- a preprocessing function configured to perform SVD; and/or
- a postprocessing function configured to perform reverse SVD.

6. The method of claim 4 or 5, wherein the surrogate model comprises:

- a preprocessing function configured to perform normalization; and/or
- a postprocessing function configured to perform reverse normalization.

7. The method of any one of claims 1 to 6, wherein at least some training examples account for short term weather and/or power demand forecast uncertainty and/or variability within the predetermined period.

8. A surrogate model of an EMS learnable according to the method of any one of claims 1 to 7.

9. A computer-implemented method of use of a surrogate model of an EMS according to claim 8, the method of use being for HPP sizing, the method including using the surrogate model instead of a high-fidelity EMS model in a HPP sizing process.

10. The method of claim 9, wherein the HPP sizing process comprises performing an optimization of a HPP sizing objective function having as variable the HPP sizing parameters $P^R$, $P^G$, $B^E$, and $B^P$, the objective function having as parameter an uncertainty parameter related to battery technology and/or renewable energy technology uncertainty, the optimization being based on results of applying the surrogate model.

11. The method of claim 10, wherein the optimization is a maximization, and the objective function is of the type:

$$\mathbb{E}[\mathrm{PI}(x,w)] - \beta \cdot \sigma[\mathrm{PI}(x,w)],$$

where $x = (P^R, P^G, B^E, B^P)$ or $x = (P^R, B^E, B^P)$ and w is the uncertainty parameter, with $w = [f^W, f^B]$, $f^W$ representing renewable energy technology uncertainty and $f^B$ representing battery technology uncertainty, where $\beta$ is a predetermined constant, where PI($x$, $w$) represents a HPP sizing objective, where $\sigma[\mathrm{PI}]$ is the standard deviation of PI, and $\mathbb{E}$ represents the expected value.

12. A computer program comprising instructions which, when executed by a computer, cause the computer to perform the method of any one of claims 1 to 7 and/or the method of any one of claims 9 to 11.

13. A computer-readable data storage medium having recorded thereon the computer program of claim 12 and/or the surrogate model of claim 8.

14. A computer system comprising a processor coupled to a memory, the memory having recorded thereon the computer program of claim 12 and/or the surrogate model of claim 8.

## FIG. 1

FIG. 2

FIG. 3

FIG. 4

FIG. 5

a) Expected Value of PI

b) Standard deviation of PI

Number of Samples (n)

## FIG. 6

FIG. 7

FIG. 8

FIG. 9

## FIG. 10

**EUROPEAN SEARCH REPORT**

Europäisches Patentamt
European Patent Office
Office européen des brevets

**Application Number**

**EP 24 30 5870**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PERERA A T D ET AL: "Machine learning methods to assist energy system optimization", APPLIED ENERGY, vol. 243, 3 April 2019 (2019-04-03), pages 191-205, XP085671044, ISSN: 0306-2619, DOI: 10.1016/J.APENERGY.2019.03.202 * the whole document * | 1-14 | INV. H02J3/32 H02J3/38 H02J7/34 |
| A | Luo Ping: "Learning Deep Architectures via Generalized Whitened Neural Networks", Proceedings of the 34th International Conference on Machine Learning, Sydney, Australia, PMLR 70, 2017, 6 August 2017 (2017-08-06), pages 1-9, XP055911073, Retrieved from the Internet: URL:http://proceedings.mlr.press/v70/luo17a/luo17a.pdf [retrieved on 2022-04-09] * Section 3 * | 1-7 | |
| A | SURESH S ET AL: "Identifying the Optimal Size of a Hybrid Power System Using a Modified Genetic Algorithm", 2024 2ND INTERNATIONAL CONFERENCE ON INTELLIGENT DATA COMMUNICATION TECHNOLOGIES AND INTERNET OF THINGS (IDCIOT), IEEE, 4 January 2024 (2024-01-04), pages 254-258, XP034572726, DOI: 10.1109/IDCIOT59759.2024.10467940 [retrieved on 2024-03-22] * abstract * | 1-14 | TECHNICAL FIELDS SEARCHED (IPC) H02J G06N |

The present search report has been drawn up for all claims

| Place of search | Date of completion of the search | Examiner |
|---|---|---|
| Munich | 15 November 2024 | Chabas, Julien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZHU, R.** ; **DAS, 625 K.** ; **SØRENSEN, P. E.** ; **HANSEN, A. D.** Optimal Participation of Co-located Wind-battery Plants in Sequential Electricity Markets. *TechRxiv*, 2022, https://doi.org/10.36227/techr-xiv.21618984.v1
- **J. P. MURCIA LEON** ; **H. HABBOU** ; **M. FRIIS-MØLLER** ; **M. GUPTA** ; **R. ZHU** ; **K. DAS**. Hydesign: a tool for sizing optimization for grid-connected hybrid power plants including wind, solar photovoltaic, and li-ion batteries. *Wind Energy Science Discussions*, 2024, vol. 9, 759-776, https://wes.copernicus.org/ar-ticles/9/759/2024/

- **J. P. MURCIA LEON** ; **H. HABBOU** ; **M. FRIIS-MØLLER** ; **M. GUPTA** ; **R. ZHU** ; **K. DAS**. *Wind Energy Science Discussions*, 2024, vol. 9, 759-776, https://wes.copernicus.org/articles/9/759/2024/